# EUROPÄISCHE PATENTANMELDUNG

(11) **EP 0 800 938 A2**
(43) Veröffentlichungstag der Anmeldung: **15.10.1997**
(21) Anmeldenummer: 96105967.2
(22) Anmeldetag: 16.04.1996
(51) Int. Cl.: B60G 15/12, F16F 9/342

(54) **Dämpfungselement**

(30) Priorität: 12.03.1996 DE 19609654
(71) Anmelder: MOWAG Motorwagenfabrik AG, 8280 Kreuzlingen (CH)
(72) Erfinder: Greuter, Adolf, 8274 Trägerwillen (DE); Doll, Bernhard, 8573 Siegerhausen (DE); Lorini, Romano, 9230 Flawil (DE); Schöder, Jens, 78462 Konstanz (DE); Osterwalder, Franz, 8280 Kreuzlingen (DE)
(74) Vertreter: Liedl, Christine, Dipl.-Chem.

(57) **Zusammenfassung**

Es ist die Aufgabe der Erfindung, ein hydraulisches Dämpfungselement zu schaffen, bei dem die Dämpfungswirkung in Zug- und Druckrichtung definiert unterschiedlich gestaltet werden kann, ohne daß eine Mehrzahl von parallel geschalteten Drosselöffnungen oder der Einsatz von Ventilen notwendig ist. Das Dämpfungselement, vor allem zur Dämpfung der Schwingungen eines Fahrzeug-Fahrwerkes mit zwei in ihrem Volumen veränderbaren Fluidräumen (1,2), die miteinander in Strömungsverbindung (3) stehen, wobei das Volumen wenigstens des einen Fluidraumes (1) durch die zu dämpfende Bewegung verändert wird und dadurch ein Überströmen des Fluids über die Strömungsverbindung (3) in den anderen Fluidraum stattfindet, die Strömungsverbindung als verschiebbare Drosselstelle (4) ausgebildet ist, kennzeichnet sich dadurch, daß die beiden einander stirnseitig gegenüberliegenden Einlaufkanten (7a,7b) der Drosselstelle zur Erzielung unterschiedlicher Strömungswiderstände in den beiden Strömungsrichtungen verschieden ausgebildet sind.

## Beschreibung

Die Erfindung betrifft ein Dämpfungselement wie es etwa zur Dämpfung von Schwingungen bei dem Fahrwerk eines Fahrzeuges verwendet wird. Insbesondere wird ein derartiges Dämpfungselement im Rahmen einer sogenannten Hydrop-Feder, also eines hydropneumatischen Federdämpferelementes, als Dämpfungselement eingesetzt.

Bei einem hydraulischem Dämpfungselement wie im vorliegenden Fall besteht die Dämpfungswirkung darin, daß zwei Fluidräume über eine Drosselstelle miteinander in Strömungsverbindung stehen und gemeinsam ein geschlossenes System bilden, wobei wenigstens einer der Fluidräume durch die zu dämpfenden Bewegungen in seinem Volumen verändert wird.

Die dadurch notwendige Überströmung von Fluid bei z. B. Volumenverringerung des direkt beeinflußten Fluidraumes in den anderen Fluidraum läuft wegen der dazwischen angeordneten Drosselstelle langsamer ab als es der verursachenden Bewegung entsprechen würde, wodurch die Bewegung in ihrem Ablauf gedämpft wird.

Im Rahmen einer Hydrop-Feder stützt sich dabei der nicht direkt durch die Bewegung des Fahrwerkes in seinem Volumen veränderte, mit Hydraulikflüssigkeit gefüllte Hohlraum gegenüber einem Gasvolumen ab, welches durch die Bewegungen des Hydrop-Federelementes zusammengedrückt wird und dadurch die benötigte Federwirkung bietet.

Insbesondere im Rahmen eines solchen Hydrop-Federelementes besteht die Notwendigkeit, die Dämpfung in Zugrichtung und Druckrichtung unterschiedlich stark auszubilden, insbesondere in der Zugrichtung eine stärkere Dämpfung, also Verlangsamung der auslösenden Bewegung, zu bewirken als in der Druckrichtung.

Zu diesem Zweck ist es bereits vorgeschlagen worden, die zwischen den beiden mit Hydraulikflüssigkeit gefüllten Fluidräumen angeordnete Fließverbindung nicht mit einer einzigen Drosselstelle auszustatten, sondern mit unterschiedlichen Drosselstellen für die beiden gegenläufigen Strömungsrichtungen, indem beispielsweise zwei parallel geschaltete Bohrungen als Drosselstellen vorhanden sind, die in jeweils einer der Richtungen durch ein Rückschlagventil gesperrt sind. Dadurch ist es möglich, diese beiden Drosselstellen unterschiedlich groß und damit mit unterschiedlicher Dämpfungswirkung auszugestalten.

Eine solche Lösung ist jedoch bereits in ihrer Herstellung vergleichsweise aufwendig, und darüber hinaus wegen der Verwendung von Ventilen, die demzufolge bewegliche Bauteile aufweisen, auch störanfällig. Da es sich um in große Stückzahlen hergestellte Produkte handelt, die darüber hinaus für die Sicherheit des Fahrzeuges äußerst wichtig sind, sind dies gravierende Nachteile.

Es ist daher die Aufgabe gemäß der Erfindung, ein hydrualisches Dämpfungselement, insbesondere zur Verwendung im Rahmen einer Hydrop-Feder, zu schaffen, bei dem die Dämpfungswirkung in Zug- und Druckrichtung definiert unterschiedlich gestaltet werden kann, ohne daß eine Mehrzahl von parallel geschalteten Drosselöffnungen oder der Einsatz von Ventilen notwendig ist.

Diese Aufgabe wird durch die kennzeichnenden Merkmale der Ansprüche 1 und 12 gelöst. Vorteilhafte Ausführungsformen ergeben sich aus den Unteransprüchen. Die unterschiedliche Dämpfungswirkung in den beiden Bewegungsrichtungen wird dadurch erzielt, daß an ein und derselben Drosselöffnung die beiderseitigen Einlaufkanten der Drosselstelle unterschiedlich gestaltet sind, so daß sich für die beiden Strömungsrichtungen an den Einlaufkanten unterschiedliche Strömungszustände und damit selbst bei gleichem minimalen Drosselquerschnitt unterschiedlich schnelle Durchströmung der Drosselstelle in den beiden Richtungen ergibt. Zu diesem Zweck muß die Drosselstelle natürlich in Längsrichtung eine ausreichende Erstreckung aufweisen, um beispielsweise die Einlaufkanten ausreichend stark abrunden oder anfasen zu können.

Insbesondere werden die Einlaufkanten dabei so gestaltet, daß sie zusammen eine sogenannte Düse-Borda-Mündung bilden. Hierzu ist die Einlaufkante, die in der schwächeren Dämpfungsrichtung angeströmt werden soll, gerundet oder angefast ausgebildet, um ein leichtes und möglichst wenig turbulentes Einströmen des Fluids in die Drosselstelle und damit den anderen Fluidraum zu gewahrleisten.

Im Gegensatz dazu ist die gegenüberliegende Einlaufkante mit einer Art Schneide oder Ableitfläche in der Nähe der Einlauföffnung ausgestattet, welche die gegen die Einlauföffnung anströmende Flüssigkeit seitlich von der Einlauföffnung ableitet, sofern der entsprechende Teilstrom der Flüssigkeit nicht exakt auf den freien Durchmesser der Einlauföffnung gerichtet ist.

Insbesondere wird dies erreicht, indem eine Art Schneide unmittelbar um die freie Einlauföffnung herum konzentrisch angeordnet wird, was durch Anordnung einer Nut mit bogenförmig konvexem Querschnitt in der die Einlauföffnung umgebenden Stirnfläche der Drosselstelle vorgesehen wird. Dadurch, daß sich diese Nut radial außen unmittelbar an den freien Querschnitt der Einlauföffnung anschließt, ergibt sich die gewünschte unmittelbar neben der Einlauföffnung gegen die anströmende Flüssigkeit aufragende Schneide, wobei der radial innen liegende Bereich des Nutengrundes als Ableitfläche für die anströmende Flüssigkeit dient.

Dadurch werden auf dieser Seite der Drosselstelle turbulente Strömungen erzeugt, die das Einströmen der Flüssigkeit in die Drosselstelle erschweren und damit eine verstärkte Dämpfungswirkung gegenüber Durchströmung der Drosselstelle in der anderen Richtung bewirken.

In der Anwendung für eine Hydrop-Feder ist dabei die Auslegung dieser Düse-Borda-Mündung mit einem Verhältnis von 1 : 4 besonders vorteilhaft.

Die Wirkung der unterschiedlichen Ausbildung der Einlaufkanten kann verstärkt werden indem zusätzlich die freien Durchmesser der Drosselstelle in der Nähe der beiden Einlaufkanten unterschiedlich groß gestaltet sind, insbesondere wenn eine zunehmende Verengung des freien Querschnitts der Drosselstelle in Längsrichtung der Drosselstelle in derjenigen Richtung stattfindet, in der eine Durchströmung der Drosselstelle gegeben ist, wenn nur die geringere Dämpfungswirkugn benötigt wird.

Weiterhin kann der Erffekt dadurch verstärkt werden, daß die innere Mantelfläche des freien Durchlasses der Drosselstelle in ihrem freien Durchmesser veränderbar, also die umgebende Fläche beweglich ausgebildet ist. Dies ist gerade bei konischer Ausbildung durch Ausführung der inneren Mantelfläche der Drosselstelle aus dünnem Federstahl, oder geeignetem Kunststoff etc. leicht möglich. Wenn dabei die beweglich in wenigstens einer, vorzugsweise in beiden radialen Richtungen durch mechanische Anschläge begrenzt wird, ist auch keine Funktionsstörung oder Verschleißerscheinung durch diese Beweglichkeit zu befürchten.

Gerade in der Anwendung eines solchen Dämpfungselementes im Rahmen einer Hydrop-Feder ist die die Dämpfungswirkung bewirkende Drosselstelle nicht fest, sondern beweglich ausgebildet, indem der durch die Bewegung in dem Volumen direkt beeinflußte Fluidraum ein in einem Außenzylinder angeordneter Hohlraum ist, dessen Volumen durch einen in dem Außenzylinder verschieblichen Hohlkolben gebildet wird, wobei sich die Drosselstelle im Kolbenboden dieses Hohlkolbens befindet.

Da es weiterhin vorteilhaft ist, den Grad der Dämpfungswirkung zusätzlich in Abhängigkeit von der momentanen Funktionsstellung des Dämpfungselementes abhängen zu lassen, wurde beispielsweise in der DE-OS 30 47 641 bereits vorgeschlagen, den Drosselquerschnitt über die Länge der Bewegung des Dämpfungselementes zu verändern. Dort geschieht dies jedoch nicht unmittelbar mit Hilfe der zwischen den beiden Fluidräumen angeordneten Drossel, von denen ein Fluidraum unmittelbar durch die zu dämpfende Bewegung in seinem Volumen verändert wird, sondern es wird zusätzlich ein weiteres Paar von Fluidräumen mit einer dazwischen in der Strömungsverbindung angeordneten Drosselstelle benötigt, mit deren Hilfe die positionsabhängige Dämpfungsveränderung bewirkt wird.

Dabei erstreckt sich ein konischer Stab durch die Drosselöffnung hindurch, und durch Relativbewegung zwischen Stab und Drosselöffnung in Längsrichtung ändert sich der zwischen dem Außenumfang des konischen Stabes und dem Innenumfang der zylindrischen Drosselbohrung verbleibende freie Querschnitt. Da jedoch die zu diesem Zweck gebildete Paarung von Fluidräumen und damit auch der konisch ausgebildete Stab eine wesentlich geringere Längserstreckung aufweisen als der Maximalhub der zu dämpfenden Bewegung, ist diese Querschnittsveränderung zum einen nur relativ grob über den Hub vorgebbar, und darüber hinaus ist die sich daraus ergebende Konstruktion wegen der zusätzlich benötigten Fluidräume sehr kompliziert.

Erfindungsgemäß wird daher vorgeschlagen, im Rahmen einer Hydrop-Feder zwar ebenfalls die im Kolbenboden des Hohlkobens ausgebildete Drosselstelle durch eine von dem Boden des Außenzylinders aufragende Stange durchdringen zu lassen.

Dadurch werden einerseits keine zusätzlichen Fluidräume benötigt, also die Konstruktion der Hydrop-Feder nicht verkompliziert. Andererseits steht für die Querschnittsveränderung am Außenumfang der aufragenden und die Drosselstelle durchdringenden Stange annähernd die gesamte Hublänge der Hydrop-Feder zur Verfügung, so daß die Verjüngung bzw. Querschnittsveränderung dieser Stange sehr exakt den Grad der Dämpfung an jeder einzelnen Stelle über den Hub der Hydrop-Feder steuert.

Ein weiterer Vorteil besteht darin, daß diese Stange im Vergleich zu ihrem Durchmesser sehr lang und damit sehr schlank, also auch relativ elastisch in Querrichtung, ausgebildet werden kann. Da zusätzlich der die Drosselstelle enthaltende Kolbenboden des Hohlkolbens selbst im vollständig eingefederten Zustand der Hydrop-Feder den Boden des Außenzylinders nicht ganz erreicht, an welcher diese Stange befestigt ist, ist eine bewegliche Befestigung dieser Stange mittels Kugelgelenk etc. nicht notwendig. Die Eigenelastizität dieser Stange zusammen mit dem immer gegebenen Mindestabstand zwischen dem Befestigungspunkt der Stange und der sie umgebenden Drosselstelle reicht aus, um die Stange ohne nennenswerte Anlagekraft und damit unerwünschte mechanische Reibung und Bremswirkung in der Drosselstelle zu führen. Aufgrund des Druckes in den Fluidräumen erfolgt dabei sogar eine Zentrierung der Stange in der Mitte des freien Durchlasses der Drosselstelle, so daß bei Durchströmung der Drosselstelle mittels Hydraulikmedium überhaupt keine mechanische Anlage zwischen Innenumfang der Drosselstelle und Außenumfang der Stange gegeben ist, sofern insbesondere der Außenquerschnitt der Stange rotationssymmetrisch ausgebildet ist.

Ein weiterer Vorteil ergibt sich, wenn die auf dem Boden des Außenzylinders befestigte Stange in Längsrichtung hohl ausgebildet ist, und über den Boden des Außenzylinders mit der Umgebung absperrbar verbunden ist.

Dadurch ist es möglich, von außen her über die Durchgangsöffnung in der Stange unmittelbar in den der Zugstufe entsprechenden, zweiten Fluidraum Flüssigkeit einzubringen bzw. den Druck dort zu verändern.

Wegen der Verbindung der beiden Fluidräume über die Drosselstelle wird eine Druckveränderung in dem einen Fluidraum, also der Zugstufe, nach kurzer Zeit eine Druckangleichung auch im anderen Fluidraum bewirken, so daß langfristig betrachtet hierdurch nur der insgesamt in den Fluidräumen vorhandene Arbeitsdruck beeinflußt werden kann. Kurzfristig betrachtet ist es jedoch auch möglich, eine Veränderung des Druckgefälles zwischen den beiden Fluidräumen ohne Positionsveränderung der Drosselstelle zwischen den beiden Fluidräumen, also ohne mechanische Beaufschlagung der Hydrop-Feder, durchzuführen. Dies ist für automatisch angepaßte Fahrwerksabstimmungen u. U. sehr hilfreich.

Eine Ausführungsform gemäß der Erfindung wird nachfolgend anhand der Figuren beispielhaft näher beschrieben. Es zeigen
- Fig. 1: eine Hydrop-Feder in der Ruhestellung,
- Fig. 2: die gleiche Hydrop-Feder im vollständig eingefedertem Zustand,
- Fig. 3: eine Detaildarstellung der Drosselstelle und
- Fig. 4: eine andere Ausführungsform dieser Drosselstelle.

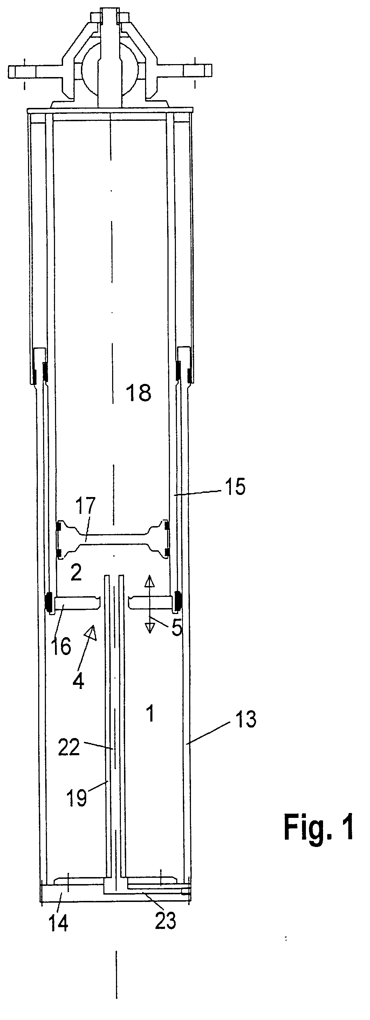

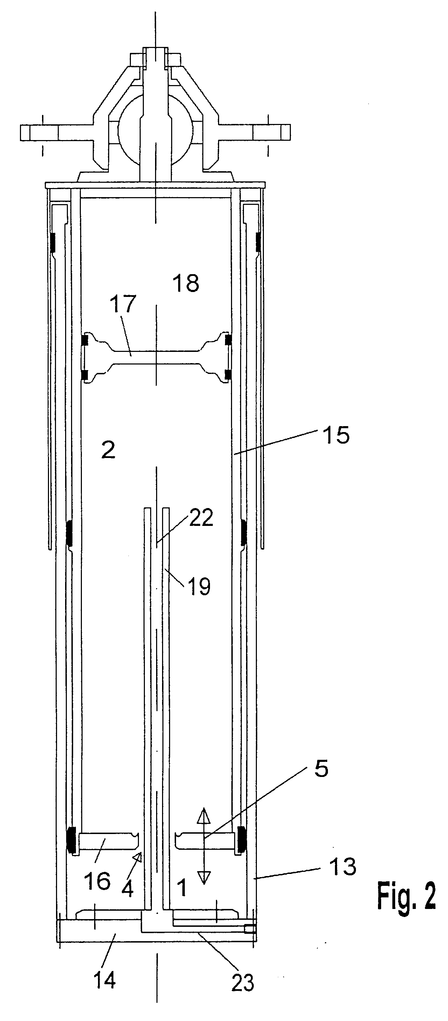

Den Fig. 1 und 2 ist vor allem der prinzipielle Aufbau einer Hydrop-Feder, deren Dämpfungselement mit den Merkmalen gemäß der Erfindung ausgestattet ist, zu entnehmen:

Dabei taucht in einen Außenzylinder 13 ein Hohlkolben 15 ein, wodurch zwischen beiden ein erster Fluidraum 1, der mit Hydraulikflüssigkeit gefüllt ist, gebildet wird.

Der Hohlraum im Inneren des Hohlkolbens 15 ist durch einen Schwebekolben 17 in zwei Teilräume unterteilt, wobei der dem Fluidraum 1 zugewandte Raum den ebenfalls mit Hydraulikflüssigkeit gebildeten Fluidraum 2 darstellt, während der an Schwebekolben 17 gegenüberliegende Teilraum der gasgefüllte Teil 18 ist.

Der Fluidraum 1 im Außenzylinder 13 sowie der Fluidraum 2 im Hohlkolben 15 stehen über eine Strömungsverbindung 3 miteinander in Wirkverbindung, welche durch eine in dem Kolbenboden 16 des Hohlkolbens 15 ausgebildete Drosselstelle 4 gebildet wird.

Da der Zylinderboden 14 des Außenzylinders 13 z. B. mit einem Rad des Fahrwerkes und das hiervon abgewandte Ende des Hohlkolbens 15, welcher aus dem Außenzylinder 13 hervorragt, z. B. mit dem Chassis des Fahrzeuges verbunden ist, führen von den Rädern gegen das Chassis gerichtete Stöße zu Eintauchbewegung des Hohlkolbens 15 in Verschieberichtung 5, und damit zu einer Verkleinerung des Flluidraumes 1. Dadurch wird das dort beinhaltete Hydrauliköl mangels Kompressibilität gezwungen, über die Drosselstelle 4 in den Fluidraum 2 überzuströmen, wodurch mittels des Schwebekolbens 17 das Volumen des Gasraumes 18 komprimiert wird.

Nach Wegfall der Druckkraft wird sich das Gas im Gasraum 18 wieder entspannen, eine Rückströmung der Hydraulikflüssigkeit vom Fluidraum 2 in den Fluidraum 1 wider stattfinden und damit der unbelastete Ausgangszustand - mit entsprechender Zeitverzögerung - wieder hergestellt werden.

Die Drosselstelle 4 wird dabei nicht allein durch den Drosselquerschnitt 6 gebildet, sondern dieser Drosselquerschnitt 6 wird wiederum teilweise durch den Querschsnitt einer die Drosselstelle 4 durchdringenden Stange 19 verringert, die vom Boden 14 des Außenzylinders 13 aufragt und die den Zylinderboden 14 des Hohlkolbens 15 vorhandene Drosselstelle 4 durchdringt, und zwar vorzugsweise in jeder der von der Drosselstelle 4 einnehmbaren Position in Verschieberichtung 5. Dabei könnte die Stange 19 statt am Zylinderboden 14 beispielsweise auch am Schwebekolben 17 befestigt sein.

Die Befestigung am Zylinderboden 14 hat jedoch den Vorteil, daß eine Längsbohrung 22 durch diese Stange 19 hindurch über entsprechende Strömungskanäle 23 mit der Umgebung oder einem außerhalb des Außenzylinders 13 angeschlossenen Druckraum oder einer Pumpe verbunden werden kann, sofern diese Strömungskanäle 23 gegenüber dem Fluidraum abgedichtet sind.

Da die Stange 19 und auch deren Längsbohrung 22 im Fluidraum 2, also der Zugstufe des Däpfers, endet, ist es möglich, einerseits über diese Außenverbindung insgesamt den Druck in den Fluidräumen 1 und 2 zu verändern, und kurzfristig auch das Druckgefälle zwischen den Fluidräumen 1 und 2 zu verändern, ohne daß die Ursache hierfür in einer mechanischen Beaufschlagung der Hydrop-Feder liegt.

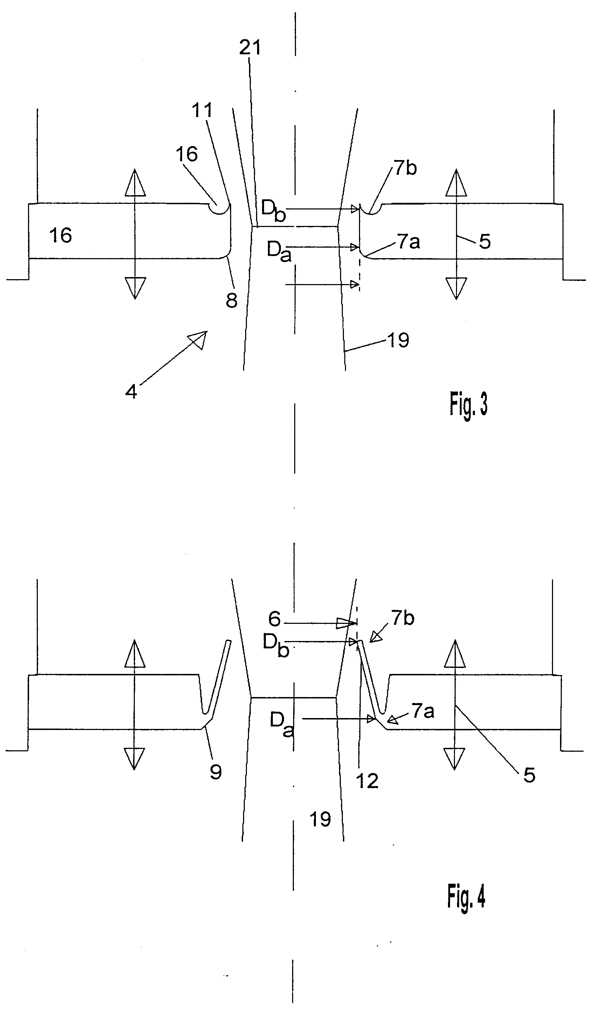

Fig. 3 zeigt eine Detaildarstellung der Drosselstelle 4 in der Ruhestellung gemäß Fig. 1. Dabei ist einerseits zu erkennen, daß die Stange 20 einen - in Fig. 3 übertrieben dargestellten - variablen Querschnitt in Verschieberichtung 5 besitzt, wobei die Querschnittsveränderung so gestaltet ist, daß in der Ruhestellung 21 die Stange 20 den geringsten Querschnitt besitzt, und dieser Querschnitt mit zunehmendem Abstand von der Ruhestellung 21 zunimmt. Allein dadurch wird bereits eine Zunahme der Dämpfungswirkung mit steigender Auslenkung der Hydrop-Feder aus der Ruhestellugn bewirkt, wobei die Zunahme in den beiden Richtungen unterschiedlich stark sein kann und damit auch die Zunahme der Dämpfung in Zug- und Druckrichtung von der Ruhestellung aus.

Zusätzlich ist zu erkennen, daß bei der Drosselstelle 4, also dem Durchlaß in dem Kolbenboden 16, die beiden Einlaufkanten 7a und 7b unterschiedlich gestaltet sind: Während die der Druckstufe zugewandte Einlaufkante 7a beispielsweise als Rundung 8 ausgebildet ist, ist die dem Fluidraum 2, also der Zugstufe zugewandte Einlaufkante 7b als Schneide ausgebildet, wobei sowohl die Schneide als auch die Rundung 8 sich vorzugsweise über den gesamten Umfang des Durchlasses in dem Kolbenboden 16 erstrecken. Ist dies nur teilweise über den Umfang der Fall, ist auch die beabsichtigte Wirkung nur in geringerem Umfang gegeben.

Die Ausbildung der Schneide an der Einlaufkante 7b erfolgt durch Einarbeiten einer Ringnut 10 mit etwa halbkreisförmigem, konvexem Querschnitt, unmittelbar konzentrisch radial außen an dem Durchlaß, also dem Einlaufdurchmesser Db, im Kolbenboden 16.

Dadurch ist die Drosselstelle 4 als Düse-Borda-Mündung ausgebildet mit unterschiedlichem Durchströmungsverhalten in den beiden Durchströmungsrichtungen. Zusätzlich kann sich über die axiale Länge des Durchlasses in Verschieberichtung 5 der Drosselquerschnitt 6 ändern, indem beispielsweise der Einlaßlaufdurchmesser Da größer ist als der Einlaufdurchmesser auf der gegenüberliegenden Seite Db. Dieser Unterschied im Querschnitt kann durch gleichbleibende Querschnittsveränderung in Verschieberichtung 5, also durch konische Ausbildung in Längsrichtung der Drosselstelle 4, überbrückt werden, oder auch durch abgestufte bzw. konvex oder konkav gekrümmte Überbrückung des Durchmesserunterschiedes, was unterschiedliche Auswirkungen auf das Strömungsverhalten und unterschiedliche Dämpfungswirkungen mit sich bringt.

In Fig. 4 ist eine andere Variante der Drosselstelle 4 dargestellt. Dabei ist die nach innen gerichtete Mantelfläche 12 der Drosselstelle 4 zum einen zum Fluidraum 2 hin verjüngend ausgebildet, vor allem aber auch in radialer Richtung beweglich, indem diese Mantelfläche 12 z. B. aus einem elastischen Material besteht, welches sich im vollständig aufgeweiteten Zustand an einer entsprechenden, im wesentlichen radial nach innen gerichteten Anschlagfläche 24 des Kolbenbodens 16 abstützt, im vollständig gegen die Stange 19 gerichteten Zustand aufgrund der Befestigung an dem Kolbenboden 16 wahlweise an der Stange 19 anliegt oder auch von dieser einer immer gegebenen Mindestabstand einhält.

In Fig. 4 ist ferner die Einlaufkante 7a nicht als Rundung, sondern als Fase 9 ausgebildet. Dagegen bleibt die gegenüberliegende Einlaufkante 7b eine Schneide 11, die in diesem Fall durch das freie Ende der beweglichen, ringförmigen Mantelfläche 12 gebildet wird.

## Patentansprüche

1. Dämpfungselement, inbesondere zur Dämpfung der Schwingungen eines Fahrzeug-Fahrwerkes mit
- zwei in ihrem Volumen veränderbaren Fluidräumen (1, 2), die miteinander in Strömungsverbindung (3) stehen,
- wobei das Volumen wenigstens des einen Fluidraumes (1) durch die zu dämpfende Bewegung verändert wird und dadurch ein Überströmen des Fluids über die Strömungsverbindung (3) in den anderen Fluidraum stattfindet,
- die Strömungsverbindung (3) als verschiebbare Drosselstelle (4) ausgebildet ist,
**dadurch gekennzeichnet, daß**
die beiden einander stirnseitig gegenüberliegenden Einlaufkanten (7a, 7b) der Drosselstelle (4) zur Erzielung unterschiedlicher Strömungswiderstände in den beiden Strömungsrichtungen verschieden ausgebildet sind.

2. Dämpfungselement nach Anspruch 1,
**dadurch gekennzeichnet, daß**
die Drosselstelle (4) einen in Verschieberichtung (5) variablen Drosselquerschnitt (6) aufweist.

3. Dämpfungselement nach Anspruch 1,
**dadurch gekennzeichnet, daß**
die Einlaufkanten (7a, 7b) in ihrem Durchmesser (Da, Db) unterschiedlich sind.

4. Dämpfungselement nach Anspruch 1, 2 oder 3,
**dadurch gekennzeichnet, daß**
die Einlaufkanten (7a, 7b) in ihrer Kontur unterschiedlich sind.

5. Dämpfungselement nach Anspruch 4,
**dadurch gekennzeichnet, daß**
die Einlaufkante (7a) als Rundung (8) oder konische Phase (9) ausgebildet ist und die Einlaufkante (7b) als scharfe Kante mit radial außen anschließender Ringnut (10) ausgebildet ist.

6. Dämpfungselement nach Anspruch 5,
**dadurch gekennzeichnet, daß**
die Ringnut (10) mit im wesentlichen bogenförmiger Querschnittskontur und unmittelbar an die Einlauf-Kante (7b) radial außen anschließend ausgebildet ist, so daß eine ringförmige, gegen das anströmende Fluid gerichtete, Schneide (11) als Kante entsteht.

7. Dämpfungselement nach einem der vorhergehenden Ansprüche,
**dadurch gekennzeichnet, daß**
die Einlaufkanten (7a, 7b) als Düse-Borda-Mündung, insbesondere mit einem Verhältnis von 1 : 4 ausgebildet sind.

8. Dämpfungselement nach einem der vorhergehenden Ansprüche,
**dadurch gekennzeichnet, daß**
die in Strömungsrichtung verlaufende Mantelfläche (12) der Drosselstelle (4) konisch verjüngend ausgebildet ist.

9. Dämpfungselement nach einem der vorhergehenden Ansprüche,
**dadurch gekennzeichnet, daß**
die Mantelfläche (12) in radialer Richtung und damit den Drosselquerschnitt (6) verändernd, begrenzt beweglich ausgebildet ist.

10. Dämpfungselement nach einem der vorhergehenden Ansprüche,
**dadurch gekennzeichnet, daß**
der Drosselquerschnitt (6) in Verschieberichtung (5) variabel ist, indem sich die Drosselstelle (4) entlang einer Stange (19) mit über die Länge veränderlichem Querschnitt bewegt, welche die Drosselstelle (4) durchdringt und teilweise, unter Belassung eines offenen Drosselquerschnittes (4), ausfüllt.

11. Dämpfungselement nach einem der vorhergehenden Ansprüche,
**dadurch gekennzeichnet, daß**
die Drosselstelle (4) über ihren Verschiebeweg (5) variabel gestaltet ist, indem der Drosselquerschnitt (6) durch den Querschnitt einer in Verschieberichtung verlaufenden, über die Verschieberichtung variablen Querschnitt aufweisenden, an einer Wandung angeordneten Längsnut gebildet wird und ein die beiden Fluidräume (1, 2) voneinander trennendes Trennelement entlang der Wandung dicht anliegend verschiebbar ist.

12. Ein hydropneumatisches Federelement mit
- einem Außenzylinder (13),
- der auf einer Stirnseite mit einem Zylinderboden (14) verschlossen ist,
- einem in dem Außenzylinder (13) verschiebbaren Hohlkolben (15) mit einer als Drosselstelle (4) wirkenden Strömungsverbindung (3) in dem dem Zylinderboden (14) zugewandten Kolbenboden (16) und
- einer flexiblen (Membran) oder beweglichen (Schwebekolben) (17) Trennwand im Hohlraum des Hohlkolbens (15), wobei
- das von Außenzylinder (13) und Hohlkolben (15) eingeschlossene Volumen der mit einer Flüssigkeit gefüllte erste Fluidraum (1) ist,
- der dem Kolbenboden (16) zugewandte, mit einer Flüssigkeit gefüllte, Teil des Hohlraumes des Hohlkolbens (15) der zweite Fluidraum (2) ist und
- der Kolbenboden (16) die Drosselstelle (4) gemäß einem der vorhergehenden Ansprüche bildet und
- der vom Kolbenboden (16) abgewandte, mit einem Gas gefüllte Teil (18) des Hohlraumes des Hohlkolbens (15) die pneumatische Feder des hydropneumatischen Federelementes bildet,
**dadurch gekennzeichnet, daß**
von dem Zylinderboden (14) aus eine Stange (19) aufragt und die Drosselstelle (4) des Zylinderbodens (16) durchdringt, wobei die Stange (19) einen über ihre Länge variablen Querschnitt (20) aufweist.

13. Federelement nach Anspruch 11,
**dadurch gekennzeichnet, daß**
der Querschnitt (20) der Stange (19) in dem axialen Bereich, in welchem sich der Kolbenboden (16) in der Ruhestelle des hydropneumatischen Federelementes befindet, den kleinsten Querschnitt aufweist und mit zunehmendem Abstand von dieser Ruhestellung (21) einen jeweils zunehmenden Querschnitt aufweisen.

14. Federelement nach Anspruch 12,
**dadurch gekennzeichnet, daß**
der Querschnitt (20) der Stange (19) von der Ruhestellung (21) aus lediglich in Druckrichtung des Federelementes einen größer werdenden Querschnitt aufweist.

15. Federelement nach einem der Ansprüche 12, 13 und 14,
**dadurch gekennzeichnet, daß**
die Stange (19) in Längsrichtung hohl ausgebildet ist, so daß vom Zylinderboden (14) aus in den Fluidraum (2), also die Zugstufe des Hydrop-Federelementes, Zusatzvolumina eingebracht bzw. von dort entnommen werden können.
